# EUROPÄISCHE PATENTSCHRIFT

(11) **EP 2 501 861 B1**
(45) Veröffentlichungstag und Bekanntmachung des Hinweises auf die Patenterteilung: **12.04.2017**
(21) Anmeldenummer: 10779459.6
(22) Anmeldetag: 30.10.2010
(51) Int. Cl.: E02B 17/08, E02B 17/02

(54) **VERFAHREN ZUM ANSTEUERN EINER OFFSHORE-PLATTFORM**
METHOD FOR CONTROLLING AN OFFSHORE PLATFORM
PROCÉDÉ DE COMMANDE D'UNE PLATE-FORME EN MER

(30) Priorität: 18.11.2009 DE 102009053529
(43) Veröffentlichungstag der Anmeldung: 26.09.2012
(73) Patentinhaber: Robert Bosch GmbH, 70469 Stuttgart (DE)
(72) Erfinder: IJMKER, Leo, NL-5345 TJ Oss (NL)
(74) Vertreter: Thürer, Andreas
(86) Internationale Anmeldenummer: PCT/EP2010/006637
(87) Internationale Veröffentlichungsnummer: WO 2011/060880

(56) Entgegenhaltungen:
- EP-A1- 2 221 417
- WO-A1-2009/017399
- DE-B- 1 258 060
- US-A- 3 722 863

## Beschreibung

Die Erfindung betrifft eine Offshore-Plattform gemäß dem Oberbegriff des Patentanspruchs 1 und ein Verfahren zum Ansteuern einer derartigen Offshore-Plattform.

Im Zuge des verstärkten Einsatzes alternativer Energiequellen gelangen beispielsweise Windkraftanlagen zu immer größerer Bedeutung. So wurde Ende 2009 vor Borkum ein sogenannter Offshore-Windpark in Betrieb genommen dessen Windenergieanlagen (WKA) außer Sichtweite von der Küste am Meeresgrund verankert sind. Die Montage dieser WKA erfolgt beispielsweise mit Hilfe einer Offshore-Plattform, die über eine Vielzahl von Stützen am Meeresboden abgestützt ist und die sich zur Montage der Windenergieanlagen aus dem Wasser herausheben lässt.

In der GB 838, 627 ist eine Offshore-Plattform offenbart, bei der die Relativbewegung zwischen den Stütze und der Plattform über Hydraulikzylinder erfolgt, die sich mit der jeweiligen Stütze verriegeln lassen und dann durch Ausfahren die Plattform entlang der Stütze nach oben bewegen oder - in kinematischer Umkehr - die Stütze bei schwimmender Plattform relativ zur Plattform bewegen. Nach einem Hub dieses Zylinders wird der plattformseitige Endabschnitt dieses Zylinders mit der Stütze verriegelt und der andere Endabschnitt entriegelt, so dass der Hydraulikzylinder zum nächsten Hub eingefahren werden kann. Danach erfolgt wiederum die Verriegelung mit der Stütze, so dass mit dem nächsten Intervall die Plattform wiederum entsprechend des Hub des Zylinders angehoben werden kann. Ein derartiger Step-By-Step-Betrieb ist zeitaufwendig. Dies ist insbesondere bei Offshore-Anwendungen problematisch, da die Plattform während des Verfahrens relativ anfällig bei Wellengang und dergleichen ist. Des weiteren können Montagearbeiten an der WKA nur bei gutem Wetter durchgeführt werden, so dass nicht produktive Zeiten, die durch das Verfahren der Offshore-Plattform verursacht sind möglichst vermieden werden sollen.

Zur Ausräumung dieses Nachteils wird in der US 4 497 591 eine Offshore-Plattform beschrieben, bei der die Verstellung über einen Rack-Pinion-Mechanismus erfolgt. Dabei sind jeder Stütze zwei Hydraulikzylinderpaare zugeordnet, deren Kolbenstangen jeweils mit einem Zahnrad verbunden sind, das mit einer Verzahnung an der Stütze kämmt. Diese Zahnräder lassen sich über eine Verriegelungseinrichtung blockieren. Die Zylindergehäuse dieser Hydraulikzylinderpaare sind jeweils mit der Plattform verbunden. Durch Ausfahren bzw. Einfahren der Zylinder kann bei verriegeltem Zahnrad die Plattform entsprechend angehoben oder abgesenkt werden. Dabei ist jeweils eines der Zylinderpaare zur Verstellung der Plattform wirksam, während das andere Zylinderpaar bei entriegelten Zahnrädern in eine Ausgangsposition zurückgefahren wird, so dass bei Durchfahren des Hubs des erstgenannten Zylinderpaars die Zahnräder des in seine Ausgangsposition zurückgefahrenen anderen Zylinderpaars verriegelt werden, so dass im Anschluss die Plattform durch dieses Zylinderpaar angehoben oder abgesenkt werden kann - d. h., es ist jeweils nur eines der Zylinderpaare in Wirkeingriff, während das jeweils andere Zylinderpaar in die Ausgangsposition zurückgefahren wird. Mit einer derartigen Lösung ist eine im Wesentlichen kontinuierliche Bewegung der Plattform einstellbar.

In der US 3 722 863 ist eine Offshore-Plattform gezeigt, bei der anstelle der aufwendigen Rack-Pinion-Konstruktion eine etwas robustere Lösung dargestellt ist, bei der die Relativverstellung zwischen Plattform und Stützen ebenfalls über Hydraulikzylinder erfolgt, die alternierend in Wirkeingriff gebracht werden. Bei dieser Lösung wird die Plattform über die Hydraulikzylinder abgestützt, wobei deren Kolbenstangen über Klauen mit einer Verzahnung der Stütze verriegelt sind. Eine entsprechende Verriegelung ist auch für die Plattform selbst vorgesehen, so dass diese direkt mit der zugeordneten Stütze verriegelbar ist. Auch bei dieser Variante werden die Hydraulikzylinder oder Hydraulikzylinderpaare alternierend angesteuert, um eine möglichst kontinuierliche Bewegung der Plattform oder der Stützen zu gewährleisten.

Auch aus der WO 2009/017399 A1 ist eine anhebbare und absenkbare Offshore-Pöattform bekannt, bei der Hydraulikzylinderpaare alternierend angesteuert werden, um eine möglichst kontiuierliche Bewegung der Plattform oder der Stützen zu erhalten.

Dieses Dokument offenbart die Merkmale des Oberbegriffs von Anspruch 1.

Die nachveröffentlichte EP 2 221 417 A1, Stand der Technik gemäß Artikel 54(3) EPÜ, zeigt eine anhebbare und absenkbare Offshore-Plattform mit Stützen. Jeder Stütze sind vier Paare von Hydraulikzylindern zugeordnet, von denen jeweils drei Zylinderpaare die Last tragen, während das vierte Zylinderpaar gerade zurückgestellt wird. Die drei lasttragenden Zylinderpaare bewegen sich so, dass sie in ihrem Verfahrweg um ein Viertel des Maximalhubs gegeneinander versetzt sind. Wenn zum Beispiel das eine Zylinderpaar ein Viertel des Maximalhubs zurückgelegt hat, so hat ein zweites Zylinderpaar gerade zwei Viertel und das dritte Zylinderpaar gerade drei Viertel des Maximalhubs zurückgelegt. Dieses Zylinderpaar wird als nächstes von der Stütze entkoppelt und muss, während die dann lasttragenden Zylinderpaare ein Viertel ihres Maximalhubs zurücklegen, zurück in seine Ausgangsposition gebracht werden.

Gemäß der EP 2 221 417 A1 kann das Hebesystem so gestaltet werden, dass es kontinuierlich und mit konstanter Geschwindigkeit arbeitet. Dies soll dadurch erreicht werden, dass die Geschwindigkeit des Jochs an dem am weitest ausgefahrenen Zylinderpaar, also dem lastabgebenden Zylinderpaar, gegen Ende des Hubs, im Vergleich zu den anderen Jochen leicht erhöht wird, damit der entsprechende Verriegelungsbolzen entlastet ist, so dass er gelöst werden kann. Höhere Geschwindigkeit des Jochs bedeutet jedoch, dass die Geschwindigkeit des lastabgebenden Zylinderpaares erhöht und damit diesem lastabgebenden Zylinderpaar ein erhöhter Druckmittelvolumenstrom zufließt.

Bei Einsatz einer derartigen Offshore-Plattform zeigte es sich, dass die Übergabe der Last von dem einen, gerade in Wirkeingriff mit der Stütze stehenden Zylinder/Zylinderpaar an das andere, in seine Ausgangsposition zurückverfahrene Zylinder/Zylinderpaar problematisch ist. In dem Fall, in dem man vor der Lastübergabe den sich am Ende seines Hubs befindlichen Zylinder verriegelt und erst dann, d. h., nach erfolgter Verriegelung den anderen Zylinder entriegelt, stellt sich wieder die eingangs beschriebene diskontinuierliche Bewegung der Plattform mit den damit einhergehenden Nachteilen ein. In dem Fall, in dem man das Verriegeln des in Wirkeingriff befindlichen Zylinders überlappend mit dem Entriegeln des übernehmenden Zylinders durchführt, kann es ebenfalls zu Unstetigkeiten in der Plattformbewegung kommen, so dass diese und die ihr zugeordneten Antriebskomponenten aufgrund der bei der Lastübertragung wechselnden Verfahrgeschwindigkeit beschädigt werden können. Derartige undefinierte Bewegungszustände sind insbesondere bei starkem Seegang oder hoher Windstärkezu vermeiden.

Eine Möglichkeit die Verfahrgeschwindigkeit der Plattform zu optimieren besteht darin, die Ausfahrgeschwindigkeit der Hydraulikzylinder während der Bewegung zwischen den Hubendpunkten (Zylinder eingefahren, Zylinder vollständig ausgefahren) um den Faktor 2 oder 3 höher als die gewünschte, durchschnittliche Bewegungsgeschwindigkeit einzustellen. Dabei ist jedoch problematisch, dass die Stützen aufgrund des unebenen Meeresbodens nicht in der gleichen Tiefe abgestützt sind, so dass bei beispielsweise vier Stützen für eine Plattform, die jeder Stütze zugeordneten Hydraulikzylinder an unterschiedlichen Hubpositionen mit Bezug zur Plattform verriegelt werden. D. h., die Zylinder der einzelnen Stützen erreichen nicht alle zum gleichen Zeitpunkt ihren Endhub oder ihre Ausgangsposition, so dass über die erhöhte Geschwindigkeit in einem für alle Zylinderanordnungen überlappenden Hubbereich die gesamte Durchschnittsbewegungsgeschwindigkeit der Plattform nur wenig verbessert werden kann. Ein weiterer Nachteil dieser Lösung besteht darin, dass durch die starken Beschleunigungen in den genannten Hubbereichen eine entsprechend hohe hydraulische Leistung installiert werden muss.

Demgegenüber liegt der Erfindung die Aufgabe zugrunde, ein Verfahren zum Ansteuern einer Offshore-Plattform zu schaffen, das eine möglichst kontinuierliche Relativbewegung zwischen Plattform und Stütze ermöglicht.

Diese Aufgabe wird durch ein Verfahren mit der Merkmalskombination des Patentanspruchs 1 gelöst.

Vorteilhafte Weiterbildungen der Erfindung sind Gegenstand der Unteransprüche.

Das erfindungsgemäße Verfahren dient zum Anheben und Absenken einer Offshore-Plattform, die eine Vielzahl von Stützen, die zum Abheben der Plattform vom Wasserspiegel mittels einer hydraulischen Hubeinrichtung auf den Meeresboden absenkbar sind. Jeder dieser Stützen sind zumindest zwei Hydraulikzylinderanordnungen zugeordnet, deren Druckräume über eine Ventileinrichtung mit einer Pumpenanordnung oder einem Rücklauf verbindbar sind. Die Hydraulikzylinderanordnungen sind einerseits an der Plattform abgestützt und andererseits über eine Verriegelung lösbar mit der zugeordneten Stütze verbindbar. Die Plattform hat des weiteren eine Steuereinheit, über die die Zylinderanordnungen derart ansteuerbar sind, dass während einer Relativbewegung zwischen Plattform und Stütze eine der Zylinderanordnungen über die Verriegelung mit der Stütze verriegelt ist, während die andere Zylinderanordnung entriegelt ist und in eine Ausgangsposition zurückgefahren wird, um dann zur Übernahme der Last mit der Stütze verriegelt zu werden. Um diese Lastübernahme möglichst "weich" ohne unstetige Veränderung der Plattformbewegungsgeschwindigkeit realisieren zu können, wird gemäß dem erfindungsgemäßen Verfahren über die Steuereinheit der Druckmittelvolumenstrom zur lastübernehmenden Zylinderanordnung während der Lastübernahme kurzzeitig gegenüber dem der vorgesehenen Sollverfahrgeschwindigkeit entsprechenden Druckmittelvolumenstrom erhöht und der Druckmittelvolumenstrom zu der lastabgebenden, sich am Ende ihres Hubs befindlichen Zylinderanordnung entsprechend verringert, so dass die hydraulische Leistung in etwa konstant ist. Nach der Lastübernahme wird der Druckmittelstrom zu der Zylinderanordnung, die die Last übernommen hat, wieder auf einen der Sollverfahrgeschwindigkeit der Plattform entsprechenden Druckmittelvolumenstrom zurückgestellt.

Auf diese Weise werden die Nachteile des eingangs beschriebenen Standes der Technik ausgeräumt, so dass die Relativgeschwindigkeit zwischen Stütze und Plattform während des Gesamthubes im Wesentlichen konstant gehalten werden kann. Die Plattform lässt sich dadurch kontinuierlich mit vergleichsweise hoher Geschwindigkeit bewegen, wobei die Position der Stützen auf dem Meeresgrund keinen Einfluss auf die Plattformgeschwindigkeit hat, da die jeder Stütze zugeordneten Zylinderanordnungen in der erfindungsgemäßen Weise individuell angesteuert werden.

Beim erfindungsgemäßen Verfahren wird es bevorzugt, dass die Steuerung des Druckmittelvolumenstroms während der Lastübernahme derart erfolgt, dass die hydraulische Leistung oder die Geschwindigkeit der Plattform in etwa konstant bleibt.

Dabei kann die Erhöhung des Druckmittelvolumenstroms während eines Zeitraums erfolgen, der in etwa 5 bis 20 % der Länge eines Hubintervalls, vorzugsweise etwa 20 Sekunden bei einem Hubintervall von 180 bis 240 Sekunden beträgt.

Die Entriegelung der lastabgebenden Zylinderanordnung erfolgt dann, wenn deren Last unter einem vorbestimmten Grenzwert abgesunken ist.

Bevorzugte Ausführungsbeispiele der Erfindung werden im Folgenden anhand schematischer Zeichnungen näher erläutert. Es zeigen:
Figur 1 eine Schemadarstellung einer Offshore-Plattform in unterschiedlichen Betriebszuständen;
Figur 2 eine Schemadarstellung einer Hubeinrichtung einer derartigen Offshore-Plattform;
Figur 3 eine hydraulische Schaltung der Hubeinrichtung aus Figur 2 und
Figur 4 eine Variante einer hydraulischen Schaltung für die Hubeinrichtung.

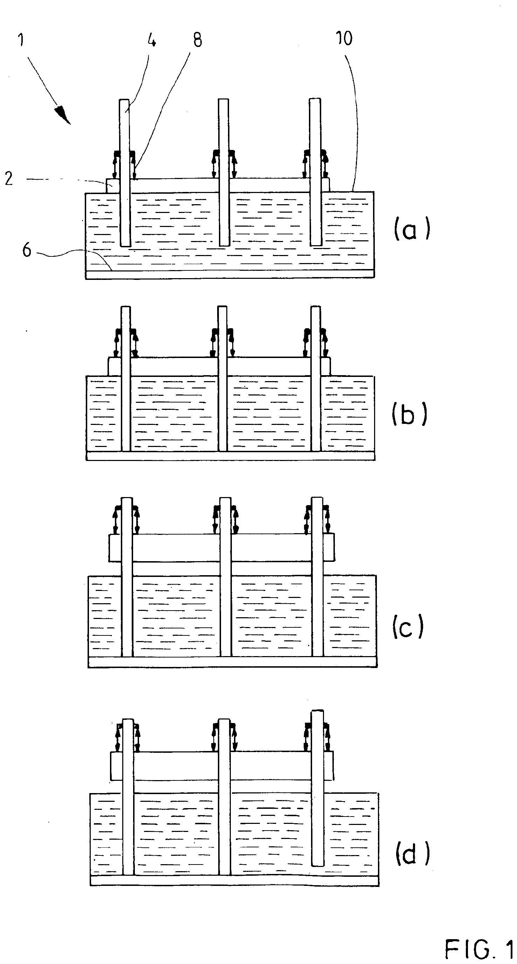

In Figur 1 ist der Grundaufbau einer erfindungsgemäßen Offshore-Plattform, im Folgenden Plattform 1 genannt, dargestellt. Eine derartige Plattform 1 kann als Arbeitsschiff (Barge) mit eigenem Antrieb oder als geschleppte Plattform - ähnlich wie eine Bohrinsel - ausgeführt sein und hat eine Arbeitsplattform 2, auf die die zur Montage erforderlichen Arbeitsgeräte angeordnet sind. Diese Arbeitsplattform 2 lässt sich über eine Vielzahl von Stützen, beispielsweise drei, vier oder sechs Stützen 4 - wie in Figur 1b gezeigt am Meeresboden 6 abstützen und dann durch Betätigung von Hubeinrichtungen 8 entlang dieser Stützen 4 vom Wasserspiegel 10 abheben, um die erforderlichen Montagearbeiten, beispielsweise die Montage einer WKA durchzuführen. Während der Fahrt zum Einsatzort sind die Stützen 4 gemäß Figur 1a über die Hubeinrichtungen 8 vom Meeresboden 6 abgehoben, wobei die Hubeinrichtungen 8 - wie im Folgenden noch näher erläutert - auf Druck belastet sind.

Sobald die Plattform 1 am Einsatzort angekommen ist, werden die Stützen 8 gemäß Figur 1b abgesenkt, bis sie sich am Meeresboden 6 abstützen können. Bei weiterer Betätigung der Hubeinrichtungen 8 wird die Arbeitsplattform 2 dann gemäß Figur 1c vom Meeresspiegel 10 abgehoben und in die vorbestimmte Arbeitsposition gebracht. In diesem Zustand sind die Hubeinrichtungen 8 gemäß Figur 1 mit einer vergleichsweise großen Kraft auf Zug beansprucht, während im Übergangszustand gemäß Figur 1b die Belastung der Hubeinrichtung 8 von Druck - auf Zugbelastung wechselt. Die Hubeinrichtungen 8 sind bei abgehobenen Stützen 4 lediglich mit einer geringen, dem Gewicht der Stützen entsprechenden Druckkraft beaufschlagt.

Figur 1d zeigt einen Zustand, bei dem die in dieser Figur rechts angeordnete Stütze 8 über die Hubeinrichtung aus dem Meeresboden 6 herausgezogen wird, während die anderen Stützen noch auf dem aufliegen - für dieses herausziehen der Stützen 4 aus dem Boden ist eine erhebliche Kraft aufzubringen - diese belastet die Hubeinrichtungen 8 auf Druck. Beim Anheben der Stützen 4 ist dies Kraft dann wesentlich geringer, da nur das Stützengewicht gehalten werden muss.

Die erfindungsgemäß hydraulisch betätigten Hubeinrichtungen 8 sind somit je nach Betriebszustand in 4-Quadranten-Betrieb mit unterschiedlichen Kräften und Bewegungsrichtungen beaufschlagt, die bei der Ansteuerung der Plattform 1 berücksichtigt werden müssen. Auf diese Kräfte wird im Folgenden noch näher eingegangen.

Wie Figur 1 des Weiteren entnehmbar ist, können mehrere Hubeinrichtungen 8 an jeder Stütze 4 angreifen, so dass die entstehenden Kräfte möglichst symmetrisch eingeleitet werden.

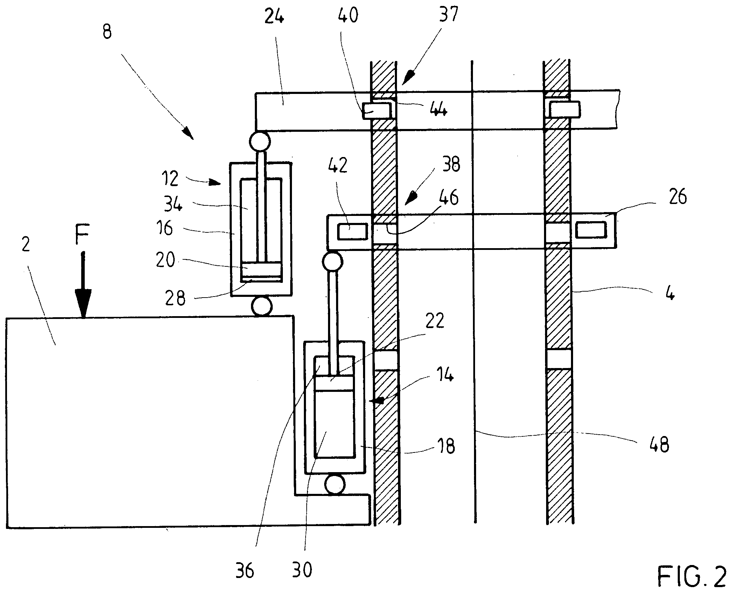

Der Grundaufbau der Hubeinrichtungen 8 soll nunmehr anhand der schematischen Darstellung in Figur 2 erläutert werden. Diese zeigt in stark schematisierter Weise einen Schnitt durch eine Stütze 4, an der die Arbeitsplattform 2 abgestützt ist. Die Hubeinrichtung 8 hat zumindest zwei Zylinderanordnungen 12, 14 die jeweils durch einen oder mehrere, vorzugsweise zwei Zylinder gebildet ist, die in Hubrichtung versetzt an der Stütze 4 bzw. der Plattform 2 angreifen. Beim dargestellten Ausführungsbeispiel sind die beiden Zylinderanordnungen 12, 14 jeweils mit ihren Zylindergehäusen 16, 18 an der Plattform 2 abgestützt, wobei diese Abstützung vorzugsweise gelenkig erfolgt, um leichte Relativverschwenkungen zwischen Plattform 2 und Stütze 4, die durch Wellengang verursacht sein können, auszugleichen. Im Zylindergehäuse 16, 18 ist jeweils ein Differentialkolben 20, 22 geführt, dessen Kolbenstange an einem Joch 24, 26 angreift, wobei diese Anbindung auch wieder gelenkig erfolgt.

Durch den Differentialkolben 20, 22 ist das Zylindergehäuse 16, 18 jeweils in einen Bodenraum 28, 30 und einem Ringraum 34, 36 unterteilt. An jedem Joch 24, 26 ist eine Verriegelung 37, 38 vorgesehen, über die das jeweilige Joch 24, 26 mit der Stütze 4 verriegelbar ist. Bei der konkreten Lösung hat die Verriegelung 36, 38 jeweils einen oder mehrere Riegelbolzen 40, 42, die zum Verriegeln in entsprechende Ausnehmungen 44, 46 der Stütze 4 eingreifen können. Gemäß der Darstellung in Figur 2 ist die Verriegelung 36, 38 symmetrisch zur Stützenachse 48 ausgebildet, so dass die Kräfte symmetrisch eingeleitet werden. Dabei kann beispielsweise ein weiterer Zylinder der Zylinderanordnung 12 an der in Figur 2 rechten Seite des Jochs 24 angreifen. Prinzipiell können mehrere derartiger Zylinder am Umfang der Stütze 4 verteilt sein und gruppenweise einem Joch zugeordnet werden.

Beim Ausführungsbeispiel gemäß Figur 2 ist die Verriegelung 38 des unteren Jochs 26 nicht in Wirkeingriff mit der Stütze 4, während die Hydraulikzylinderanordnung 12 über das Joch 24 mit der Stütze 4 verriegelt wird. Bei der Verriegelung sind die jeweiligen Zylinderanordnungen 12, 14 durch das Gewicht F der Plattform 2 auf Zug belastet, so dass entsprechend hohe Drücke in den Ringräumen 34, 36 wirken.

Zum Abheben der Arbeitsplattform 2 vom Meeresspiegel 10 wird - wie im Folgenden noch näher erläutert - Druckmittel in den Ringraum 34 der mit der Stütze 4 verriegelten Zylinderanordnung 12 gefördert, so dass sich der Ringraum 34 vergrößert und entsprechend der Bodenraum 28 verkleinert - das Zylindergehäuse 16 und damit die Plattform 2 wird dann in der Darstellung gemäß Figur 2 nach oben bewegt und angehoben.

In der Zwischenzeit wird bei der entriegelten Zylinderanordnung 14 Druckmittel in den Bodenraum 30 gefördert, so dass der Differentialkolben 22 ausfährt, bis der Riegelbolzen 42 in Überdeckung mit der nächsten, in Ausfahrrichtung benachbarten Ausnehmung 46 gelangt. Diese Position ist in Figur 2 gerade erreicht. Die dabei lasttragende Zylinderanordnung 12 hat in dieser Position ihren Hub nahezu beendet, so dass zum weiteren Bewegen der Plattform 2 der Riegelbolzen 42 der übernehmenden, ausgefahrenen Zylinderanordnung 14 in Verriegelungseingriff mit der Ausnehmung 46 der Stütze 4 gebracht wird und entsprechend der Riegelbolzen 40 der übergebenden, vollständig eingefahrenen Zylinderanordnung 12 entriegelt wird, so dass dessen Differentialkolben 20 ausgefahren werden kann, um den Riegelbolzen 40 mit einer über der Ausnehmung 44 liegenden, nicht dargestellten Ausnehmung der Stütze 4 in Verriegelungseingriff bringen zu können. Durch diese alternierende Ansteuerung der Zylinderanordnungen 12, 14 kann die Plattform 2 dann entlang der Stützen 4 abgehoben werden. In entsprechender Weise werden durch geeignete Ansteuerung der Zylinderanordnungen 12, 14 auch die anderen, in Figur 1 dargestellten Betriebszustände gesteuert. Bis hierhin entspricht diese Ansteuerung im Wesentlichen der Vorgehensweise, die aus Stand der Technik bekannt ist.

Erfindungsgemäß wird jedoch während der Lastübergabe von der Zylinderanordnung 12 an die Zylinderanordnung 14 der Druckmittelvolumenstrom in den Ringraum 36 der übernehmenden Zylinderanordnung 14 gegenüber demjenigen Druckmittelvolumenstrom erhöht, der zur vorbestimmten Bewegungsgeschwindigkeit der Plattform 2 erforderlich ist. Der Druckmittelvolumenstrom zum Ringraum 34 der übergebenden Zylinderanordnung 12 wird entsprechend verringert, 'wobei in diesem Übergangszustand beide Zylinderanordnungen 12, 14 mit der Stütze 4 verriegelt sind. Diese Erhöhung bzw. Verringerung der Druckmittelvolumenströme zu den Ringräumen 34, 36 der Zylinderanordnung 12, 14 erfolgt während eines gegenüber dem Gesamthub einer Zylinderanordnung 12, 14 vergleichsweise kurzen Zeitraums. Vergehen beispielsweise zum Einfahren der lasttragenden Zylinderanordnung 12, 14 drei bis vier Minuten, so stellt man die vorbeschriebene Druckmittelvolumenstromänderung während der Lastübergangsphase für etwa 20 Sekunden ein. Selbstverständlich sind auch Abweichungen von diesen Zeitvorgaben möglich, da diese stets von den vorliegenden Umweltbedingungen und auch von der Geometrie und dem Gewicht der Anlage abhängen.

Während dieser Veränderung des Druckmittelvolumenstroms wird die Last allmählich von der schneller einfahrenden, übernehmenden Zylinderanordnung 14 übernommen, während die Last an der übergebenden Zylinderanordnung 12 aufgrund der geringeren Bewegungsgeschwindigkeit langsam absinkt - sobald diese Last auf einen vorbestimmten Grenzwert nahe Null abgesunken ist, wird die übergebende Zylinderanordnung 12 entriegelt und wieder ausgefahren - der Zyklus kann von neuem beginnen, wobei durch diese erfindungsgemäße Druckmittelsteuerung eine nahezu kontinuierliche Verfahrgeschwindigkeit der Plattform 2 bzw. der Stütze 4 mit Bezug zur Plattform 2 realisierbar ist.

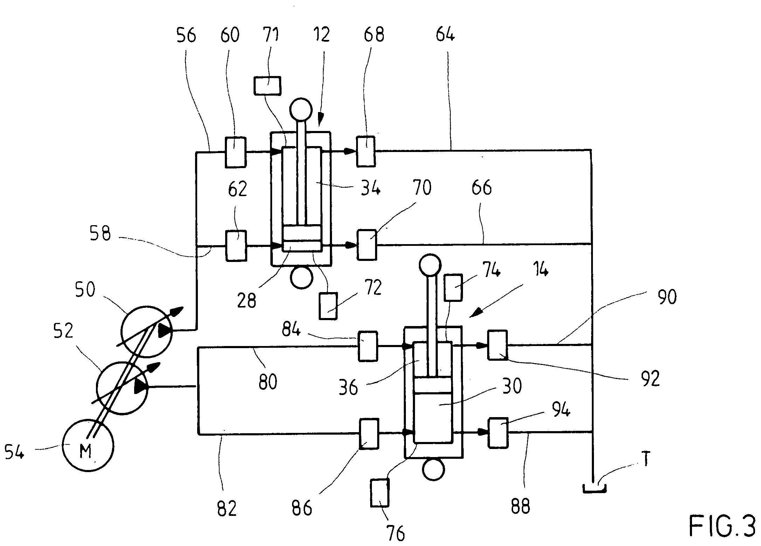

Figur 3 zeigt eine hydraulische Schaltung zur Ansteuerung der beiden Zylinderanordnungen 12, 14 in der vorbeschriebenen Weise.

Wie ausgeführt, erfordert die erfindungsgemäße Steuerung der Druckmittelvolumenströme in der Übergangsphase die Erhöhung des Druckmittelvolumenstroms zur lastübernehmenden Zylinderanordnung 14, während der Druckmittelvolumenstrom zur lastübergebenden Zylinderanordnung (hier Zylinderanordnung 12) entsprechend verringert wird, so dass die hydraulische Leistung und somit auch die Verfahrgeschwindigkeit der Arbeitsplattform 2 in etwa konstant bleibt.

Gemäß der Schaltung in Figur 3 ist jeder Zylinderanordnung 12, 14 eine eigene Verstellpumpe zugeordnet, die beim dargestellten Ausführungsbeispiel von einem gemeinsamen Motor, vorzugsweise einem Elektromotor 54 angetrieben werden. Die Pumpen 50, 52 sind vorzugsweise volumenstromgeregelt, so dass auch bei unterschiedlichen Lastzuständen der vorbestimmte Druckmittelvolumenstrom gewährleistet ist. Der Druckanschluss der Verstellpumpe 50 ist über eine Zulaufleitung 56 mit dem Ringraum 34 der Zylinderanordnung 12 und über eine weitere Zulaufleitung 58 mit dem Bodenraum 28 der Zylinderanordnung 12 verbunden. In jeder Zulaufleitung 56, 58 ist ein Steuerventil 60, 62 vorgesehen, das über eine nicht dargestellte Steuereinheit angesteuert werden kann, um die Druckmittelverbindung zwischen der Verstellpumpe 50 und dem Ringraum 34 bzw. dem Bodenraum 28 aufzusteuern bzw. zu schließen.

Der Ringraum 34 und der Bodenraum 28 sind des Weiteren über eine Ablaufleitung 64, 66 mit einem Tank T verbunden, aus dem die beiden Verstellpumpen 50, 52 Druckmittel ansaugen. In jeder Ablaufleitung 64, 66 ist ein Druckbegrenzungsventil 68, 70 vorgesehen, über das der Druck im jeweils zugeordneten Druckraum 24, 28 auf einen vorbestimmten Maximalwert begrenzt werden kann. Geeignete Druckbegrenzungsventile sind im Datenblatt RD 21050/02.03 der Bosch Rexroth AG beschrieben, auf die der Einfachheit halber hingewiesen wird. Eine Besonderheit der Schaltung besteht darin, dass diese Druckbegrenzungsventile 68, 70 über die Steuereinheit verstellbar sind, um den begrenzten Druck in Abhängigkeit von dem Betriebszustand der Zylidneranordnung 12 zu verändern. Der Druck in den Druckräumen 28, 34 und 30, 36 wird jeweils über einen Druckaufnehmer 71, 72; 74, 76 erfasst und an die nicht dargestellte Steuereinheit gemeldet, so dass die Druckbegrenzungsventile 68, 70 und auch die vorstehend beschriebenen Verriegelungen in Abhängigkeit vom Druck in diesen Druckräumen ansteuerbar sind.

Der der Zylinderanordnung 14 zugeordnete Zweig hat den gleichen Aufbau wie der vorbeschriebene Zweig der Hydraulikzylinderanordnung 12, d. h, die Verstellpumpe 52 ist über eine Zulaufleitung 80, 82 und darin angeordnete Steuerventile 84, 86 mit dem Ringraum 36 bzw. dem Bodenraum 30 verbunden. Diese sind wiederum über Ablaufleitungen 90, 88 und Druckbegrenzungsventile 92, 94 mit dem Tank verbindbar.

Wie in Figur 1 dargestellt, werden die Hubeinrichtungen (Zylinderanordnungen 12, 14) in Abhängigkeit vom jeweiligen Betriebszustand mit unterschiedlichen Kräften beaufschlagt.

Wird beispielsweise bei dem in Figur 1a dargestellten Betriebszustand die Stütze 4 bei schwimmender Arbeitsplattform 2 abgesenkt, so ist die aktive, verriegelte Zylinderanordnung 12, 14 mit einer negativen, ziehenden Last beaufschlagt, wobei Druckmittel in den jeweiligen Ringraum 34, 36 gefördert wird.

Zum Anheben der Arbeitsplattform 2 bei auf dem Meeresgrund aufliegenden Stützen 4 (Figuren 1b, 1c) wirkt aufgrund des hohen Gewichtes F der Arbeitsplattform 2 in dem Ringraum 34, 36 der jeweils aktiven Zylinderanordnung 12, 14 ein sehr hoher Druck - die Zylinderanordnung 12, 14 ist dabei mit einer positiven Last (auf Zug wirkend) beaufschlagt. Das Druckmittel wird dabei ebenfalls in den jeweiligen Ringraum 34, 36 gefördert.

Zum Absenken der Plattform über Wasser wirkt der entsprechend hohe Druck weiterhin in dem Ringraum 34, 36 der aktiven Zylinderanordnung 12, 14 wobei allerdings durch das Absenken eine ziehende Last wirkt und das Druckmittel in die Bodenseite 28, 30 der aktiven Zylinderanordnung 12, 14 gefördert werden muss.

Zum Anheben der Stützen 4 vom Meeresboden 6 in die Fahrposition ist nur eine vergleichsweise gering Kraft erforderlich, so dass der Druck in der Bodenseite 28, 30 der aktiven Zylinderanordnung 12, 14 entsprechend gering ist. Es wirkt eine positive Last und das Druckmittel wird in die jeweilige Bodenseite gefördert. Dabei ist zu beachten, dass die Kraft in der Bodenseite beim Herausziehen aus dem Meeresgrund 6, wie erläutert wesentlich höher sein kann.

Gemäß diesen Lastzuständen werden die Zylinderanordnungen 12, 14 im sogenannten 4-Quadranten-Betrieb angesteuert, wobei in den jeweiligen Druckräumen stark unterschiedliche Drücke anliegen können. Bei der herkömmlichen Lösung gemäß der GB 838,627 ist in dem Ablauf der Hydraulikzylinder ebenfalls jeweils ein Druckbegrenzungsventil angeordnet - dieses ist jedoch auf einen Wert eingestellt, der sich an dem Maximaldruck orientiert, der sich beim Ausheben der Arbeitsplattform einstellt - dieser Druck ist wesentlich höher als der Druck in den anderen Betriebszuständen (schwimmende Plattform, Ausfahren oder Einfahren der Stützen), so dass in diesen Betriebszuständen von der Pumpe ein sehr hoher Druck aufgebracht werden muss, um das jeweils im Ablauf gelegene Druckbegrenzungsventil aufzusteuern - die damit einhergehenden Drosselverluste sind erheblich.

Bei der erfindungsgemäßen Lösung werden diese Nachteile durch die Verstellbarkeit der Druckbegrenzungsventile 68, 70, 92, 94 während des Betriebs in Abhängigkeit von dem jeweiligen Lastzustand eingestellt. So wird beim Lastzustand gemäß Figur 1c das im Ablauf gelegene Druckbegrenzungsventil 70, 94 auf den aufgrund des hohen Plattformgewichtes wirksamen hohen Druck eingestellt ist. Beim Absenken der Plattform ist diese hohe Druckeinstellung solange wirksam, bis die Plattform auf dem Wasser aufsetzt und somit nur noch das Gewicht der Stütze 4 drückend auf die jeweilige aktive Zylinderanordnung 12, 14 wirkt - das dann im Ablauf gelegene Druckbegrenzungsventil 70, 94 wird dann auf einen entsprechend geringeren Wert eingestellt, um die Drosselverluste zu minimieren. Entsprechend erfolgt auch die Einstellung der im Ablauf gelegenen Druckbegrenzungsventile 68, 92 beim Anheben der Stützen 4 vom Meeresgrund 6 auf den dabei anliegenden niedrigen Druck eingestellt. Ein derart niedriger Druck wird beispielsweise auch nach dem Entriegeln der Zylinderanordnung 12, 14 und dem Ausfahren der jeweiligen Zylinderanordnung 12, 14 eingestellt, um die Drosselverluste zu minimieren.

Die Einstellung des Begrenzungsdrucks erfolgt erfindungsgemäß in Abhängigkeit vom jeweiligen Druck in den Druckräumen, der über die Druckaufnehmer 71, 72, 74, 76 erfasst und von der Steuereinheit ausgewertet wird. Der zu begrenzende Druck wird dabei um eine vorbestimmte Druckdifferenz höher als der im jeweiligen ablaufseitigen Druckraum zu erwartende Druck eingestellt.

Die Ansteuerung der Verstellpumpen 50, 52 erfolgt so, dass die Geschwindigkeit und auch die Position der Arbeitsplattform 2 konstant gehalten werden kann, wobei zu berücksichtigen ist, dass die einzelnen Stützen in unterschiedlichen Höhen auf dem Meeresboden abgestützt sein können, so dass die jeder Stütze 4 zugeordneten Zylinderanordnungen 12, 14 individuell angesteuert werden müssen.

Bei der Umsteuerung der Druckbegrenzungsventile 68, 70, 92, 94 ist darauf zu achten, dass die Umstellung auf den niedrigeren Druck nicht zu früh erfolgt, da dann die wirkende Last nicht gehalten werden kann. Auf der anderen Seite resultiert ein zu späte Umstellung auf einen niedrigeren Druck in unnötigen Drosselverlusten, wie sie beim Stand der Technik stets auftreten.

Durch die erfindungsgemäße Ansteuerung der Druckbegrenzungsventile 68, 70, 92, 94 im Ablauf ist gewährleistet, dass die jeweiligen Zylinderanordnungen 12, 14 in jedem Betriebszustand vorgespannt sind, wobei diese Vorspannung in Abhängigkeit von der wirksamen Kraft eingestellt wird.

Die jeweilige von den Zylinderanordnungen 12, 14 aufzubringende Zylinderkraft berechnet sich aus der bodenseitigen Wirkfläche des jeweiligen Kolbens multipliziert mit dem Druck in der Bodenseite minus dem Produkt aus dem Druck an der Ringseite und der Ringfläche des jeweiligen Kolbens.

Der Begrenzungsdruck berechnet sich dann entsprechend auf der Bodenseite aus der Kolbenkraft geteilt durch die bodenseitige Kolbenfläche (Druck an der Bodenseite) plus der vorgenannten Sicherheitsdruckdifferenz. Entsprechend berechnet sich der Begrenzungsdruck auf der Stangenseite aus der Last F (Vorzeichen beachten) geteilt durch die Ringfläche des Kolbens (Druck im Ringraum) plus der vorgenannten Sicherheitsdruckdifferenz.

Durch geeignete Einstellung der Druckmittelvolumenströme und der im Ablauf gelegenen Druckbegrenzungsventile ist eine kontinuierliche Relativbewegung zwischen den Stützen 4 und der Arbeitsplattform 2 gewährleistet, wobei sehr hohe Verfahrgeschwindigkeiten einstellbar sind.

Bei dem vorbeschriebenen Ausführungsbeispiel sind zwei Verstellpumpen 50, 52 von einem gemeinsamen Motor angetrieben.

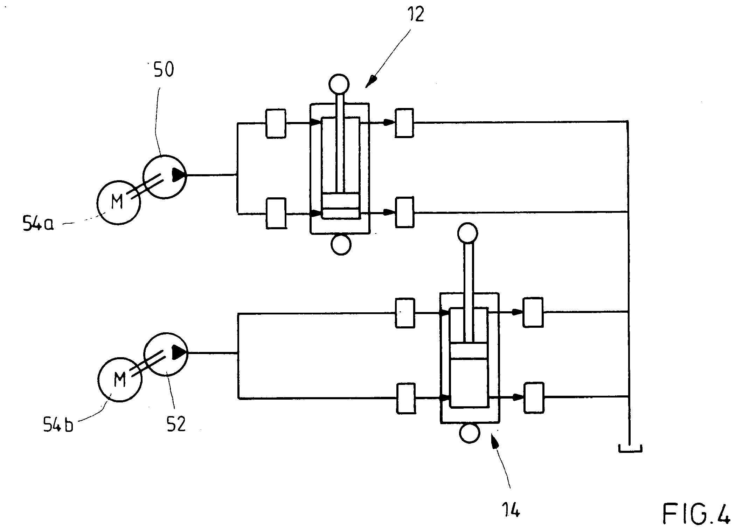

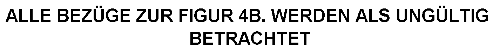

Figur 4 zeigt eine Variante, bei der jeder Hydraulikzylinderanordnung 12, 14 eine eigene Pumpe 50, 52 mit jeweils eigenem Motor 54a, 54b zugeordnet ist. Diese Pumpen 50, 52 können wiederum als Verstellpumpen ausgeführt sein. Beim dargestellten Ausführungsbeispiel werden Konstantpumpen verwendet, deren Volumenstrom über die Drehzahl der Motoren 54a bzw. 54b verändert wird, um den vorbestimmten Druckmittelvolumenstrom einzustellen. Im Übrigen entspricht das Ausführungsbeispiel gemäß Figur 4 demjenigen aus Figur 3, so dass unter Hinweis auf die diesbezüglichen Ausführungen auf weitere Erläuterungen verzichtet werden kann.

Wie bereits erwähnt, kann anstelle einer einzigen, vergleichsweise großen Pumpe 50, 52 auch eine Vielzahl von kleineren Pumpen verwendet werden, die von einem gemeinsamen Motor angetrieben werden oder aber, zur Veränderung des Druckmittelvolumenstroms auch mit jeweils einem Motor angetrieben werden, so dass einzelne Pumpen einer Pumpenanordnung zur Veränderung des Druckmittelvolumenstroms weggeschaltet werden können.

Die Ansteuerung der Pumpen kann nach einer Volumen- oder Drucksteuerung erfolgen.

Bei dem vorbeschriebenen Ausführungsbeispielen sind die Zylinderanordnungen 12, 14 so angeordnet, dass diese bei angehobener Arbeitsplattform 2 mit einer Zugkraft beaufschlagt sind. Das erfindungsgemäße Konzept lässt sich jedoch genauso bei Konstruktionen anwenden, bei denen die Arbeitsplattform 2 auf den Zylinderanordnungen 12, 14 abgestützt ist, so dass diese mit einer Druckkraft beaufschlagt sind. Aufgrund der hohen Belastungen der Kolbenstange werden bei einer derartigen Lösung die Zylinderanordnungen 12, 14 mit sehr hohen Knickkräften beaufschlagt, so dass die hängende Lagerung gemäß den beschriebenen Ausführungsbeispielen bevorzugt wird.

Bei der Steuerung der Druckmittelvolumenströme ist noch darauf zu achten, dass nach der Lastübernahme der Ringraum der übernehmenden Zylinderanordnung 12, 14 sehr klein ist und der Ringraum der übergebenden Zylinderanordnung 12, 14 maximal ist - die entsprechenden Kompressionsvolumina und unterschiedlichen Druckänderungen durch Zuführen von Druckmittel in einen kleinen und dem gegenüber wesentlich größeren Druckraum sind zu berücksichtigen.

Offenbart sind ein Offshore-Plattform und ein Verfahren zum Ansteuern einer derartigen Offshore-Plattform, bei der eine Arbeitsplattform über mehrere Stützen am Meeresboden abgestützt ist. Die Stützen sind über Hubeinrichtungen mit der Arbeitsplattform gekoppelt, wobei jede Hubeinrichtung zwei zueinander versetzte Hubzylinderanordnungen hat, die alternierend in Eingriff gebracht werden. Erfindungsgemäß wird zur Lastübernahme die lastübernehmende Zylinderanordnung mit einem höheren Druckmittelvolumenstrom versorgt, während der Druckmittelvolumenstrom zur lastabgebenden Zylinderanordnung entsprechend verringert wird.

## Patentansprüche

1. Verfahren zum Ansteuern einer Offshore-Plattform mit einer Vielzahl von Stützen (4), die zum Abheben der Plattform (2) vom Wasserspiegel mittels einer hydraulischen Hubeinrichtung (8) abgesenkt werden, wobei die Hubeinrichtung (8) für jede Stütze (4) zumindest zwei Hydraulikzylinderanordnungen (12, 14) hat, deren Druckräume (28, 34; 30, 36) über eine Ventileinrichtung (60, 62; 84, 86) mit einer Pumpenanordnung (50, 52) oder einem Ablauf (64, 66; 88, 90) verbindbar sind und die einerseits an der Plattform (2) abgestützt sind und andererseits über eine Verriegelung (37, 38) lösbar mit der Stütze (4) verbunden werden und mit einer Steuereinheit, über die die Zylinderanordnung (12, 14) derart angesteuert wird, dass während einer Relativbewegung zwischen Plattform (2) und Stütze (4) eine lastabgebende Zylinderanordnung (12, 14) über die Verriegelung (37, 38) mit der Stütze (4) verriegelt ist, während die andere, lastübernehmende Zylinderanordnung (14) entriegelt ist und in eine Ausgangsposition zurückgefahren wird, um dann zur Übernahme der Last mit der Stütze (4) verriegelt zu werden, **dadurch gekennzeichnet, dass** über die Steuereinheit der Druckmittelvolumenstrom zur lastübernehmenden Zylinderanordnung (12, 14) während der Lastübernahme kurzzeitig gegenüber dem der vorgesehenen Sollverfahrgeschwindigkeit der Plattform (2) entsprechenden Druckmittelvolumenstrom erhöht wird und der Druckmittelvolumenstrom zu der lastabgebenden Zylinderanordnung (12, 14) entsprechend verringert wird und dass nach der Lastübernahme der Druckmittelvolumenstrom zu der Zylinderanordnung, die die Last übernommen hat, wieder auf einen der Sollverfahrgeschwindigkeit der Plattform (2) entsprechenden Druckmittelvolumenstrom zurückgestellt wird.

2. Verfahren nach Patentanspruch 1, wobei die Erhöhung des Druckmittelvolumenstroms der lastübernehmenden Zylinderanordnung (12, 14) und die Verringerung des Druckmittelvolumenstroms der lastabgebenden Zylinderanordnung (12, 14) derart erfolgt, dass die hydraulische Leistung und/oder die Geschwindigkeit der Plattform (2) in etwa konstant bleibt.

3. Verfahren nach Patentanspruch 1 oder 2, wobei die Erhöhung während eines Zeitraums eingestellt wird, der etwa 5 bis 20 % der Länge eines Hubintervalls, vorzugsweise etwa 20 Sekunden bei einem Hubintervall von 180 bis 240 Sekunden beträgt.

4. Verfahren nach einem der Patentansprüche 1 bis 3, wobei die lastabgebende Zylinderanordnung (12, 14) entriegelt wird, wenn die auf diese wirkende Last unter einen vorbestimmten Grenzwert abgesunken ist.

## Claims

1. Method for controlling an offshore platform with a plurality of supports (4) which are lowered by means of a hydraulic lifting device (8) in order to lift the platform (2) from the water level, wherein the lifting device (8) has, for each support (4), at least two hydraulic cylinder arrangements (12, 14) whose pressure chambers (28, 34; 30, 36) can be connected via a valve device (60, 62; 84, 86) to a pump arrangement (50, 52) or to an outlet (64, 66; 88, 90) and which are supported on the platform (2) on the one hand and are releasably connected to the support (4) via a locking mechanism (37, 38) on the other hand, and with a control unit via which the cylinder arrangement (12, 14) is controlled in such a way that, during a relative movement between platform (2) and support (4), a load-releasing cylinder arrangement (12, 14) is locked with the support (4) via the locking mechanism (37, 38), whereas the other, load-accepting cylinder arrangement (14) is unlocked and is moved back into a starting position in order then to be locked with the support (4) to accept the load, **characterized in that**, via the control unit, the pressurized medium volume flow to the load-accepting cylinder arrangement (12, 14) is increased for a short period with respect to the pressurized medium volume flow corresponding to the intended desired speed of movement of the platform (2) during the load acceptance and the pressurized medium volume flow to the load-releasing cylinder arrangement (12, 14) is correspondingly reduced, and **in that**, after the load acceptance, the pressurized medium volume flow to the cylinder arrangement which has accepted the load is reset again to a pressurized medium volume flow corresponding to the desired speed of movement of the platform (2).

2. Method according to Patent Claim 1, wherein the increase in the pressurized medium volume flow of the load-accepting cylinder arrangement (12, 14) and the reduction in the pressurized medium volume flow of the load-releasing cylinder arrangement (12, 14) is effected in such a way that the hydraulic power and/or the speed of the platform (2) remains approximately constant.

3. Method according to Patent Claim 1 or 2, wherein the increase is set during a time period which is approximately 5 to 20% of the length of a lifting interval, preferably approximately 20 seconds in the case of a lifting interval of 180 to 240 seconds.

4. Method according to one of Patent Claims 1 to 3, wherein the load-releasing cylinder arrangement (12, 14) is unlocked if the load acting thereon has dropped below a predetermined limit value.

## Revendications

1. Procédé de commande d'une plate-forme en mer, comprenant une pluralité de jambes (4) qui sont enfoncées pour soulever la plate-forme (2) au-dessus du niveau de l'eau au moyen d'un dispositif de levage hydraulique (8), le dispositif de levage (8) présentant pour chaque jambe (4) au moins deux agencements de vérins hydrauliques (12, 14), dont les espaces de pression (28, 34 ; 30, 36) peuvent être connectés par le biais d'un dispositif de soupape (60, 62 ; 84, 86) à un agencement de pompe (50, 52) ou à une sortie d'écoulement (64, 66 ; 88, 90) et qui sont d'une part supportés sur la plate-forme (2) et qui sont d'autre part connectés à la jambe (4) de manière amovible par le biais d'un verrouillage (37, 38) et avec une unité de commande, par le biais de laquelle l'agencement de vérins (12, 14) est commandé de manière à ce que, pendant un mouvement relatif entre la plate-forme (2) et la jambe (4), un agencement de vérins fournissant la charge (12, 14) soit verrouillé à la jambe (4) par le biais du verrouillage (37, 38), tandis que l'autre agencement de vérins reprenant la charge (14) est déverrouillé et est ramené dans une position de départ, afin d'être ensuite verrouillé à la jambe (4) pour reprendre la charge, **caractérisé en ce que** par le biais de l'unité de commande, le débit volumique de fluide sous pression vers l'agencement de vérins reprenant la charge (12, 14) est brièvement augmenté pendant la reprise de la charge par rapport au débit volumique de fluide sous pression correspondant à la vitesse de déplacement de consigne prévue de la plate-forme (2) et le débit volumique de fluide sous pression vers l'agencement de vérins fournissant la charge (12, 14) est réduit en conséquence et **en ce qu'**après la reprise de la charge le débit volumique de fluide sous pression vers l'agencement de vérins qui a repris la charge est à nouveau ramené à un débit volumique de fluide sous pression correspondant à la vitesse de déplacement de consigne de la plate-forme (2).

2. Procédé selon la revendication 1, dans lequel l'augmentation du débit volumique de fluide sous pression de l'agencement de vérins reprenant la charge (12, 14) et la réduction du débit volumique de fluide sous pression de l'agencement de vérins fournissant la charge (12, 14) s'effectuent de telle sorte que la puissance hydraulique et/ou la vitesse de la plate-forme (2) restent approximativement constantes.

3. Procédé selon la revendication 1 ou 2, dans lequel l'augmentation est ajustée pendant un intervalle de temps qui représente approximativement 5 à 20 % de la longueur d'un intervalle de levage, de préférence qui vaut approximativement 20 secondes pour un intervalle de levage de 180 à 240 secondes.

4. Procédé selon l'une quelconque des revendications 1 à 3, dans lequel l'agencement de vérins fournissant la charge (12, 14) est déverrouillé lorsque la charge agissant sur celui-ci est descendue en dessous d'une valeur limite prédéterminée.
